# EUROPEAN PATENT APPLICATION

(11) **EP 4 653 679 A1**
(43) Date of publication of application: **26.11.2025**
(21) Application number: 24744657.8
(22) Date of filing: 16.01.2024
(51) Int. Cl.: F02B 19/10, F02B 19/16, F02B 19/18, F02M 21/02, F02M 61/14

(54) **INTERNAL COMBUSTION ENGINE**

(30) Priority: 20.01.2023 JP 2023007603
(71) Applicant: KAWASAKI JUKOGYO KABUSHIKI KAISHA, Kobe-shi, Hyogo 650-8670 (JP)
(72) Inventor: MIYAMOTO, Sekai, Kobe-shi, Hyogo 650-8670 (JP)
(74) Representative: Arnold & Siedsma
(86) International application number: PCT/JP2024/001002
(87) International publication number: WO 2024/154736

(57) **Abstract**

Provided is an internal combustion engine (1) which includes a cylinder (5) in which a main combustion chamber (3) is defined, a piston (7) configured to reciprocate within the cylinder (5), a fuel injector (9) configured to inject a fuel (F1) into the main combustion chamber (3), and a prechamber (13) located so as to adjoin the main combustion chamber (3). The prechamber (13) includes an orifice (11) and is configured to generate and eject torch flame (TF) through the orifice (11), and the prechamber (13) is positioned such that the torch flame (TF) ejected through the orifice (11) ignites the main fuel (F1) injected from the fuel injector (9) in the main combustion chamber (3).

## Description

### CROSS REFERENCE TO THE RELATED APPLICATION

This application is based on and claims Convention priority to Japanese patent application No. 2023-007603 filed January 20, 2023, the entire disclosure of which is herein incorporated by reference as a part of this application.

### BACKGROUND OF THE INVENTION

### (Field of the Invention)

The present disclosure relates to a prechamber-assisted internal combustion engine.

### (Description of Related Art)

It is conventionally known that diffusive combustion is a suitable form of combustion in terms of, for example, efficiency and emission level of nitrogen oxides (NOx), when a gaseous fuel exhibiting fast kinetics, such as, e.g., hydrogen gas, is used as a main fuel in an internal combustion engine. For instance, in Patent Document 1, a gaseous fuel is injected from a diffusive combustion fuel injector and ignited by an ignition plug to conduct diffusive combustion.

### [Related Document]

### [Patent Document]

[Patent Document 1] JP Laid-open Patent Publication No. 2007-198275

### SUMMARY OF THE INVENTION

However, the use of an ignition plug for ignition not only requires the ignition plug to be positioned in the vicinity of a fuel injector, but also necessitates that there be such an ignition plug for each fuel injection hole of the fuel injector. This makes it difficult to accommodate changes in fuel injector specifications flexibly, including, for example, the provision of more than one fuel injection hole in a fuel injector to adapt to the scaling-up of an internal combustion engine, and relocation of fuel injectors to a more confined section of the space.

Therefore, an object of the present disclosure is to provide an internal combustion engine capable of carrying out diffusive combustion, with features that facilitate flexible accommodation of changes in fuel injector specification to thereby overcome the aforementioned challenges.

In order to overcome the aforementioned challenges, the present disclosure provides an internal combustion engine which includes a cylinder in which a main combustion chamber is defined, a piston configured to reciprocate within the cylinder, a fuel injector configured to inject a fuel into the main combustion chamber, and a prechamber located so as to adjoin the main combustion chamber. The prechamber includes an orifice and is configured to generate and eject torch flame through the orifice, and the prechamber is positioned such that the torch flame ejected through the orifice ignites the fuel injected from the fuel injector in the main combustion chamber.

An internal combustion engine according to the present disclosure is capable of carrying out diffusive combustion and can more easily accommodate changes in fuel injector specifications flexibly.

It should be noted that any combinations of at least two features disclosed in the claims and/or the specification and/or the drawings should also be construed as encompassed by the present disclosure. Especially, any combinations of two or more of the claims should also be construed as encompassed by the present disclosure.

### BRIEF DESCRIPTION OF THE DRAWINGS

The present disclosure will be more clearly understood from the following description of preferred embodiments that is made with reference to the accompanying drawings. However, the embodiments and the drawings are given merely for the purpose of illustration and explanation, and should not be used to delimit the scope of the present disclosure, which scope is to be delimited by the appended claims. In the accompanying drawings, alike numerals are assigned to and indicate alike parts throughout the different figures, and:
Fig. 1 is a schematic longitudinal sectional view of the general configuration of an internal combustion engine in accordance with one embodiment of the present disclosure;
Fig. 2 is a transverse sectional view of the internal combustion engine of Fig. 1 to schematically illustrate how a fuel may be injected from a fuel injector;
Fig. 3 is a longitudinal sectional view of the internal combustion engine of Fig. 1 to schematically illustrate how torch flame may be ejected from a prechamber;
Fig. 4 is a perspective view of the internal combustion engine of Fig. 1 to schematically illustrate an example relative arrangement of a fuel injection hole and an orifice;
Fig. 5 is a transverse sectional view of the internal combustion engine of Fig. 1 to schematically illustrate an example of how torch flame may be ejected from the prechamber to ignite streams of the injected fuel;
Fig. 6 is a perspective view which schematically shows the relative magnitude between the distance of the axis of a first fuel injection hole from the axis of a shared orifice and the distance of the axis of a second fuel injection hole from the axis of the shared orifice;
Fig. 7A is a schematic longitudinal sectional view of an internal combustion engine in accordance with a variant of the embodiment of Fig. 1, with a modified arrangement of the fuel injector and the prechamber;
Fig. 7B is a transverse sectional view of the internal combustion engine of Fig. 7A to schematically illustrate how streams of the injected fuel may emanate from the fuel injector;
Fig. 8 is a schematic transverse sectional view of an internal combustion engine in accordance with another variant according to the present disclosure, with a modified arrangement of the fuel injector and the prechamber;
Fig. 9A is a schematic longitudinal sectional view of an internal combustion engine in accordance with yet another variant according to the present disclosure, with a modified arrangement of the fuel injectors and the prechamber;
Fig. 9B is a schematic transverse sectional view of the internal combustion engine of yet another variant of Fig. 9A, with the modified arrangement of the fuel injectors and the prechamber;
Fig. 10 is a schematic transverse sectional view of an internal combustion engine in accordance with yet another variant according to the present disclosure, with a modified arrangement of the fuel injector and the prechambers;
Fig. 11 is a schematic transverse sectional view of an internal combustion engine in accordance with yet another variant according to the present disclosure, with a modified arrangement of the fuel injector and the prechamber;
Fig. 12 is a schematic transverse sectional view of an internal combustion engine in accordance with yet another variant according to the present disclosure, with a modified arrangement of the fuel injector and the prechamber; and
Fig. 13 is a schematic transverse sectional view of an internal combustion engine in accordance with yet another variant according to the present disclosure, with a modified arrangement of the fuel injector and the prechamber.

### DESCRIPTION OF EMBODIMENTS

What follows is a description of non-limiting embodiments according to the present disclosure, which will be made in accordance with the drawings.

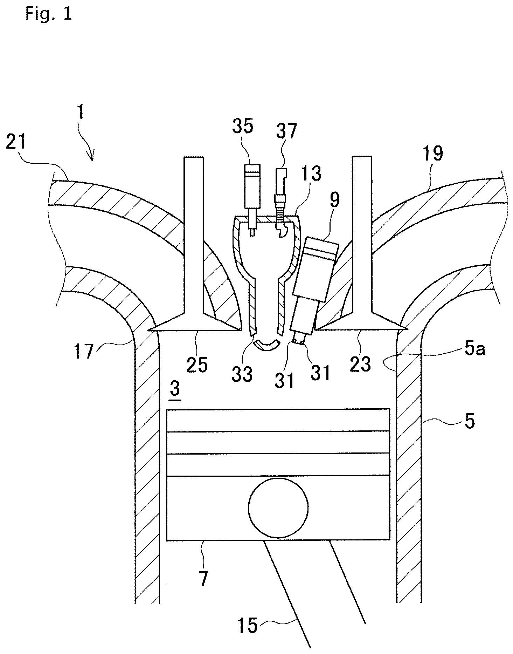

Fig. 1 depicts a prechamber-assisted internal combustion engine 1 in accordance with an embodiment of the present disclosure. The internal combustion engine 1 includes a cylinder 5 in which a main combustion chamber 3 is defined, a piston 7 configured to reciprocate within the cylinder 5, a fuel injector 9 configured to inject a fuel F1 into the main combustion chamber 3, and a prechamber 13 located so as to adjoin the main combustion chamber 3. Hereinafter, the fuel F1 to be injected into the main combustion chamber 3 will be referred to as a "main fuel F1".

The main fuel F1 is a gas fuel. In the instant embodiment, a hydrogen-containing gas is used as the main fuel F1. The term "hydrogen-containing gas" used herein encompasses both a fuel that partially contains a hydrogen gas and a fuel that is entirely composed of a hydrogen gas. For instance, the main fuel F1 may be a fuel mixture of natural gas and hydrogen.

The piston 7 reciprocates within the cylinder 5 to drive a crankshaft (not shown) through a connecting rod 15. The internal combustion engine 1 includes a cylinder head 17, which is located on the cylinder 5 and is formed with an intake port 19 and exhaust port 21 opening into the main combustion chamber 3. The main combustion chamber 3 is delimited by the inner peripheral surface 5a of the cylinder 5, the crown surface of the piston 7, and the underside of the cylinder head 17. The cylinder head 17 is provided with an intake valve 23 that opens and closes a portion of the intake port 19 that communicates with the main combustion chamber 3 and an exhaust valve 25 that opens and closes a portion of the exhaust port 21 that communicates with the main combustion chamber 3.

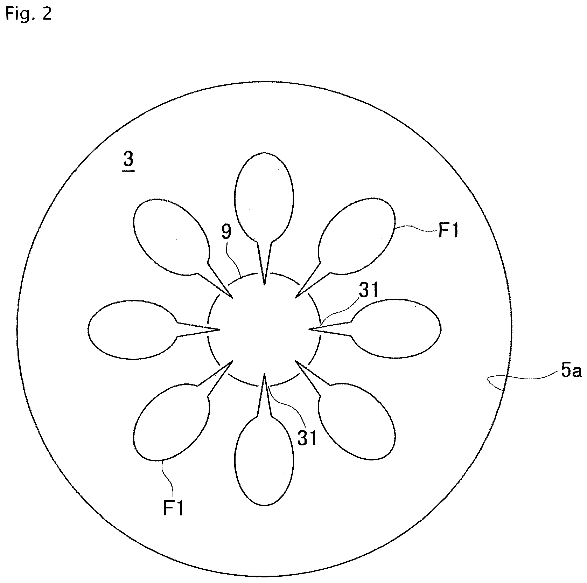

In the instant embodiment, the fuel injector 9 is mounted to the cylinder head 17. The fuel injector 9 is formed as a diffusive combustion fuel injector. More specifically, the fuel injector 9 is provided with a plurality of fuel injection holes 31 or, in the instant example, eight fuel injection holes 31 as shown in Fig. 2. The fuel injector 9 is cylindrically shaped with the plurality of fuel injection holes 31 arranged in the circumferential direction of the fuel injector 9. In the illustrated example, the plurality of fuel injection holes 31 are arranged at regular intervals in the circumferential direction of the fuel injector 9. The provision of the plurality of fuel injection holes 31 in the circumferential direction of the cylindrically shaped fuel injector 9 allows the main fuel F1 to be injected in a distributed manner within the main combustion chamber 3, thus, making it possible to carry out more efficient combustion. In particular, the arrangement of the plurality of fuel injection holes 31 at regular intervals allows for a more uniform distribution of the main fuel F1, thus, making it possible to conduct highly efficient combustion. It should be noted that the shape of the fuel injector is not limited to a cylindrical shape.

In the instant embodiment, the internal combustion engine 1 is constructed in a diffusive combustion design that has the fuel injector 9 provided to inject the main fuel F1 into the main combustion chamber 3, with no fuel injector provided to inject a fuel in the intake port 29. Nevertheless, the internal combustion engine 1 may be constructed to have another fuel injector provided in the intake port 29, in addition to the fuel injector 9 that injects the main fuel F1 into the main combustion chamber 3, in order to inject a different type or quantity of fuel from the main fuel F1, such as, e.g., natural gas, gasoline, or a smaller amount of a hydrogen-containing gas than the main fuel F1.

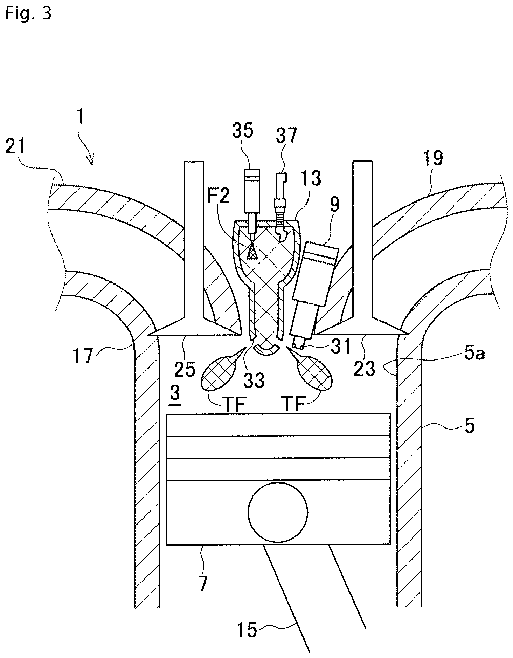

Referring to Fig. 1, in the instant example, the prechamber 13 is located at the cylinder head 17 so as to adjoin the main combustion chamber 3. As illustrated in Fig. 3, the prechamber 13 includes an orifice 33 and configured to generate and eject torch flame TF through the orifice 33 into the main combustion chamber 3. More specifically, the prechamber 13 is equipped, in the interior thereof, with an auxiliary fuel injector 35 configured to inject a prechamber fuel F2 and an ignition plug 37 configured to ignite the prechamber fuel F2 injected from the auxiliary fuel injector 35. The auxiliary fuel injector 35 delivers the prechamber fuel F2 to the prechamber 13, and the ignition plug 37 ignites the prechamber fuel F2 within the prechamber 13 to cause combustion. In this way, the torch flame TF oriented towards the main combustion chamber 3 is generated out of the orifice 33.

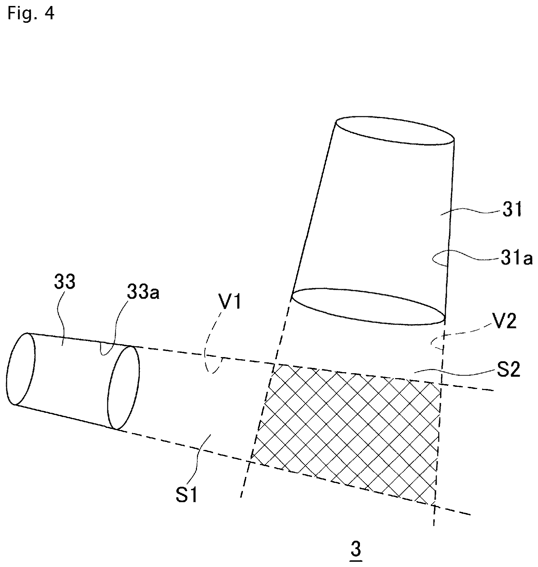

The prechamber 13 is positioned such that the torch flame TF ejected through the orifice 33 ignites the main fuel F1 injected from the fuel injector 9 in the main combustion chamber 3. In particular, the implementation of the configuration in which the prechamber is "positioned such that the torch flame ejected through the orifice ignites the main fuel injected from the fuel injector in the main combustion chamber" is well ensured for example, by positioning the prechamber 13 such that a first volume S1 delimited by an imaginary inner peripheral surface V1 formed by extending the peripheral wall surface 33a of the orifice 33 of the prechamber 13 towards the main combustion chamber 3 at least partially overlaps with a second volume S2 delimited by an imaginary inner peripheral surface V2 formed by extending the peripheral wall surface 31a of a fuel injection hole 31 of the fuel injector 9 towards the main combustion chamber 3, as shown in Fig. 4. It should be noted that while, in Fig. 4, the peripheral wall surface 33a of the orifice 33 and the peripheral wall surface 31a of the fuel injection hole 31 are conically tapered, the shapes of the peripheral wall surfaces may alternatively be a cylindrical shape, a polygonally tubular shape, or a polygonally tapered shape, with the conically tapered shape being only one of the non-limiting examples of their shapes. Moreover, the instant example represents only one of the non-limiting configurations in which the prechamber is "positioned such that the torch flame ejected through the orifice ignites the main fuel injected from the fuel injector in the main combustion chamber".

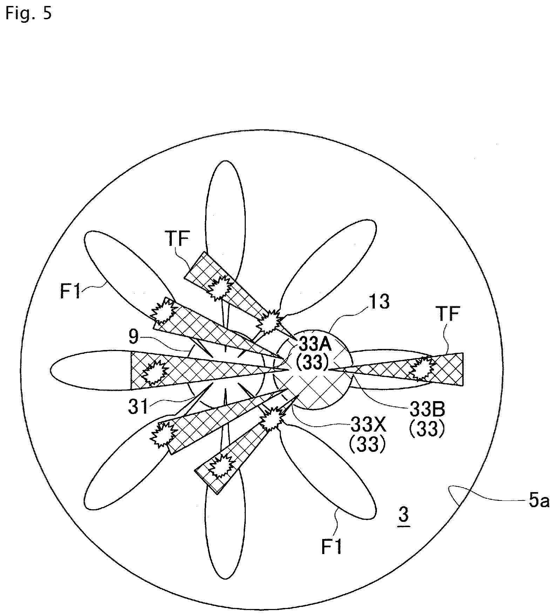

Referring to Fig. 5, in the instant embodiment, the prechamber 13 comprises a smaller number of orifices 33 than the number of the fuel injection holes 31 or, in the instant example, six orifices 33, and one or more of the orifices 33 are arranged such that the torch flame TF ejected therethrough ignites the main fuel F1 injected through more than one of the fuel injection holes 31. In the rest of the description, orifice(s) 33 for igniting the main fuel F1 injected through more than one of the fuel injection holes 31 will sometimes be called "shared orifice 33X". In the illustrated example, the orifices 33 of the prechamber 13 comprise an orifice 33 located so as to face towards the fuel injector 9 and an orifice 33 located so as to face away from the fuel injector 9. In the rest of the description, an orifice 33 located so as to face towards the fuel injector 9 will sometimes be called a "first orifice 33A", whereas an orifice 33 located so as to face away from the fuel injector 9 will sometimes be called a "second orifice 33B". In the instant example, there are multiple first orifices 33A, and those located on both ends among the multiple first orifices 33A are each configured as a shared orifice 33X for igniting the fuel injected through two of the fuel injection holes 31. By adopting such a configuration, it can be ensured that the streams of the injected main fuel F1 are efficiently ignited within the main combustion chamber 3 to implement diffusive combustion.

Nevertheless, the above example represents only one of the non-limiting configurations of the number of orifices in the prechamber, and their number may be selected as appropriate, as long as the fuel from fuel injection holes of interest can be ignited.

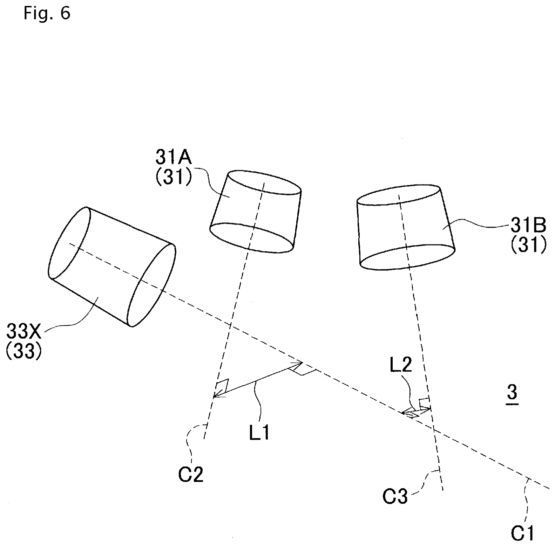

Further, in the instant embodiment, the shared orifice 33X is arranged to satisfy the relation: L1 > L2, where L1 indicates the distance between the axis C1 of a respective orifice 33 and the axis C2 of a first one 31A of the more than one of the fuel injection holes 31 that is closer to the respective orifice 33, and L2 indicates the distance between the axis C1 of the respective orifice 33 and the axis C3 of a second one 31B of the more than one of the fuel injection holes 31 that is located farther than the first one 31A of the more than one of the fuel injection holes 31 from the respective orifice 33. In other words, the axis C1 of the shared orifice 33X does not intersect the axis C2 of the first fuel injection hole 31A, and passes by the axis C3 of the second fuel injection hole 31, but at a closer distance to the axis C3 than to the axis C2 of the first fuel injection hole 31A, as shown in Fig. 6. This allows the torch flame TF ejected through each shared orifice 33X illustrated in Fig. 5 to propagate through a position offset with respect to the center of the stream of the main fuel F1 injected through the first fuel injection hole 31A, thus, enabling only a portion of the torch flame to come into contact with this stream of the injected main fuel F1 for ignition. In addition, since the torch flame propagates through a position relatively far from the stream of the main fuel F1 injected through the first fuel injection hole 31A, the rest of the torch flame can still retain the energy from the injection and reach the stream of the main fuel F1 injected through the farther, second fuel injection hole 31 to likewise ignite this stream of the injected main fuel F1.

As has been illustrated with respect to Fig. 5, in the instant embodiment, the prechamber 13 includes the first orifices 33A located so as to face towards the fuel injector 9 and the second orifice 33B located so as to face away from the fuel injector 9. In the instant example, the first orifices 33A are formed with an orifice size that is larger than that of the second orifice 33B. According to this configuration, the larger orifice size of the first orifices 33A located so as to face towards the fuel injector 9 than the orifice size of the second orifice 33B located so as to face away from the fuel injector 9 makes the velocity of the torch flame ejected through the first orifices 33A higher than the velocity of the torch flame ejected through the second orifice 33B. Here, it is so designed that the torch flame ejected through the first orifices 33A ignites the streams of the main fuel F1 injected towards a side of the fuel injector 9 that faces away from the prechamber 13 whereas the torch flame ejected through the second orifice 33B ignites the stream of the main fuel F1 injected from the fuel injector 9 towards the prechamber 13, from among the streams of the main fuel F1 injected from the fuel injector 9. By means of the torch flame out of the first orifices 33A having an accelerated velocity, the timing of ignition of the more distant streams of the injected main fuel F1 can be aligned with the timing of ignition of the nearer stream of the injected main fuel F1 by the torch flame out of the second orifice 33B. In this way, more homogeneous combustion can be conducted within the main combustion chamber.

As mentioned earlier, the main fuel F1 in the internal combustion engine 1 of the instant embodiment is a hydrogen-containing gas. According to this configuration, the amount of carbon dioxide discharged from the internal combustion engine 1 can be reduced. Further, a gaseous fuel exhibiting fast kinetics, such as a hydrogen-containing gas, can not only achieve an improved combustion efficiency but also suppress the generation of NOx with the aid of a diffusive combustion scheme, and is therefore quite beneficial when used in the internal combustion engine 1 with the abovementioned features. Nevertheless, a hydrogen-containing gas is only one of the non-limiting examples of the main fuel, and gaseous fuels commonly used in internal combustion engines, including, for example, n-heptanes, natural gas, and ammonia, alcohols such as methanol and ethanol, gasoline, heavy oils, and light oils, may be used.

In the instant embodiment, the same type of fuel as the main fuel F1 is used as the prechamber fuel F2. However, fuels with higher ignitability than the main fuel F1, including, for example, light oils, heavy oils, and diesel fuels such as a biodiesel fuel, can be used as the prechamber fuel F2. The use of a fuel with higher ignitability as the prechamber fuel can provide an improved ignition stability.

For instance, the internal combustion engine 1 is a large-scale internal combustion engine for use in a marine vessel, a power plant, and other such suitable systems. For large-scale internal combustion engines, injection of the main fuel F1 through the plurality of fuel injection holes 31, as has been illustrated with respect to Fig. 3, is advantageous in terms of homogeneous combustion, thereby making the use of the internal combustion engine 1 with the abovementioned features all the more beneficial. Yet, the teachings of the present disclosure are also applicable to smaller internal combustion engines for use in vehicles and other such suitable applications.

The preceding embodiment has been described in connection with an example in which a single fuel injector 9 and a single prechamber 13 are located at the cylinder head 17. Nevertheless, the foregoing example represents only one of the non-limiting sets of the number and arrangement of the fuel injector 9 and the prechamber 13, and their numbers and arrangements may be selected as desired, as long as the torch flame TF from the prechamber 13 can ignite the main fuel F1 injected from the fuel injector 9. For instance, such possible alternative arrangements of the fuel injector 9 and the prechamber 13 are illustrated in the following variants.

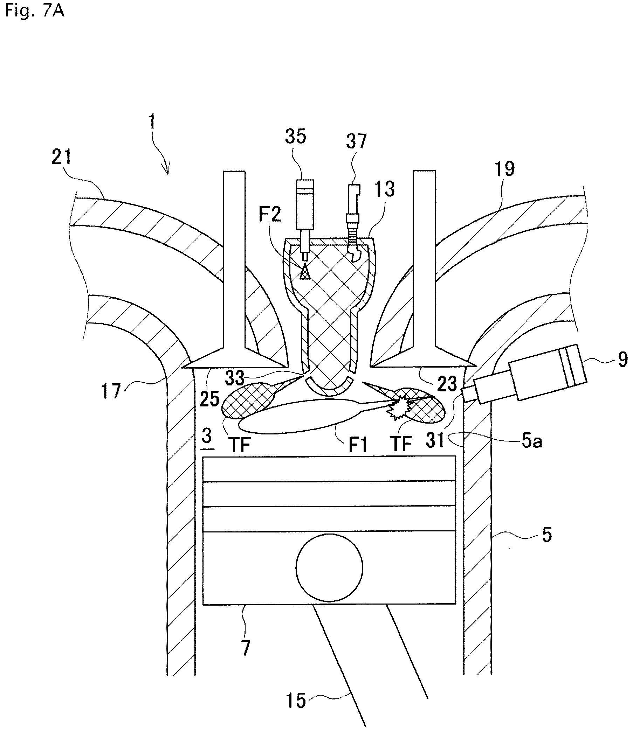

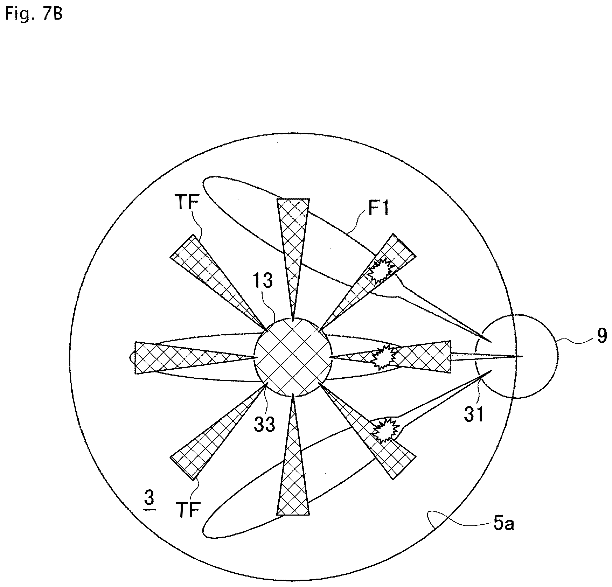

Referring to Fig. 7A, one of the fuel injector 9 or the prechamber 13 may be located at the cylinder head 17 whereas the other of the fuel injector 9 and the prechamber 13 may be located in a lateral portion of the cylinder 5 or a lateral portion of the cylinder head 17, such that the prechamber 13 is not adjacent to the fuel injector 9. In the variant illustrated in Fig. 7A, the prechamber 13 is located at the cylinder head 17 whereas the fuel injector 9 is located in a lateral portion of the cylinder 5. In addition, while the prechamber 13 includes a smaller number of orifices 33 than the number of the fuel injection holes 31 in the example illustrated in Fig. 5, there may be a greater number of the orifices 33 than the number of the fuel injection holes 31 as shown in Fig. 7B. In the instant example, the prechamber 13 includes eight orifices 33 whereas the fuel injector 9 includes three fuel injection holes 31. In this case, at least two torch flames TF ejected through the orifices 33 of the prechamber 13 contribute to the ignition of each of the streams of the main fuel F1 injected through the fuel injection holes 31. It should be noted that there may alternatively be a torch flame that does not directly contribute to the ignition of the streams of the injected main fuel F1.

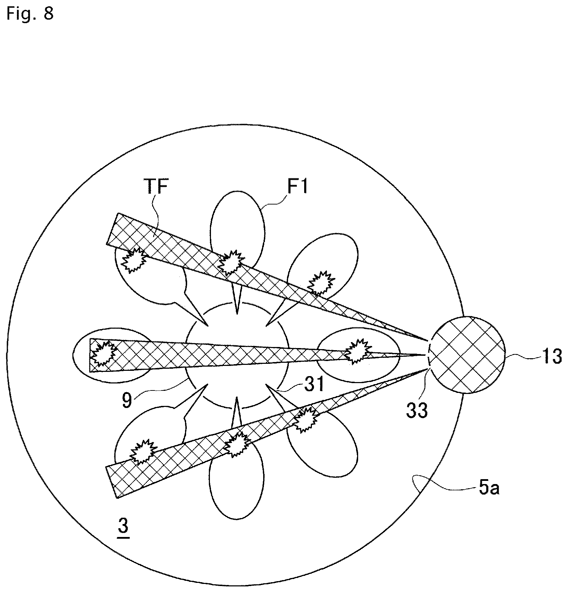

In the variant illustrated in Fig. 8, the fuel injector 9 is located at the cylinder head 17 whereas the prechamber 13 is located in a lateral portion of the cylinder 5. More specifically, in the instant example, the fuel injector 9 located at the cylinder head 17 includes eight fuel injection holes 31 whereas the prechamber 13 located in a lateral portion of the cylinder 5 includes three orifices 33. Each flame torch TF ejected through a respective one of the orifices 33 of the prechamber 13 ignites more than one of the streams of the injected main fuel F1.

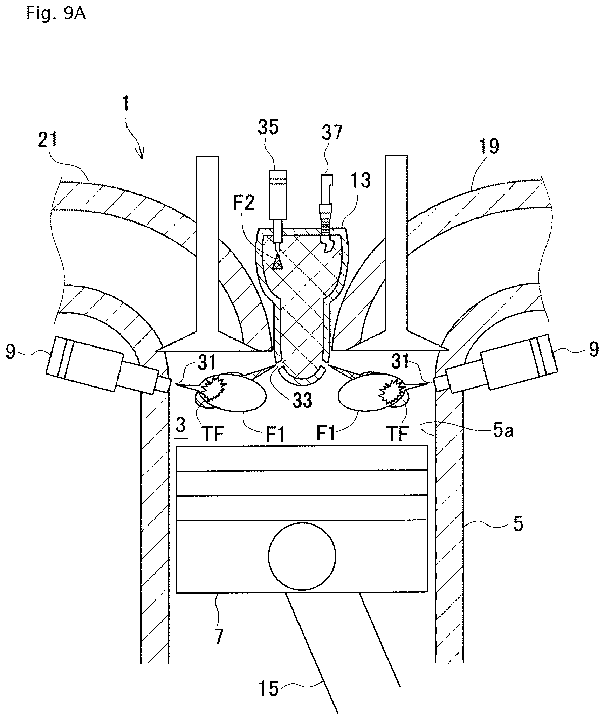

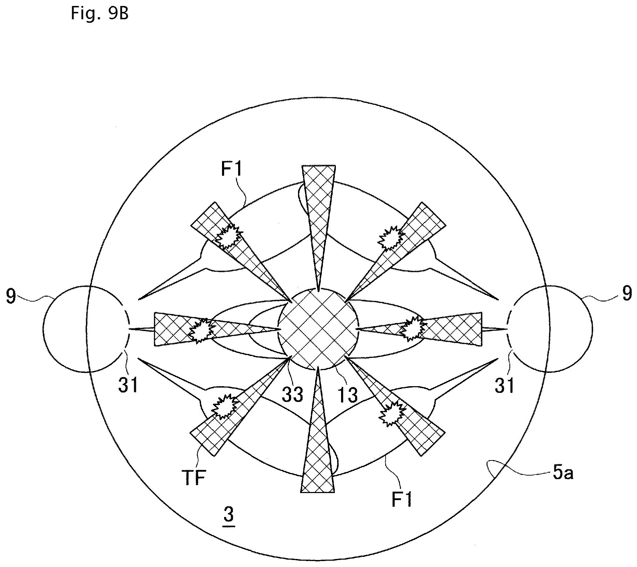

Also, there may be provided more than one fuel injector 9, and there may be provided more than one prechamber 13. For instance, in the variant illustrated in Fig. 9A, a single prechamber 13 is located at the cylinder head 17 whereas two fuel injectors 9 are located in lateral portions of the cylinder 5. The prechamber 13 includes eight orifices 33 whereas each of the two fuel injectors 9 includes three fuel injection holes 31 as shown in Fig. 9B. Each torch flame TF ejected through the orifices 33 of the prechamber 13 may contribute to the ignition of at least one of the streams of the injected main fuel F1. Nevertheless, again, there may alternatively be a torch flame that does not directly contribute to the ignition of the streams of the injected main fuel F1. Yet alternatively, in a further variant (not shown), a single prechamber 13 may be located at the cylinder head 17 whereas two fuel injectors 9 may be located in lateral portions of the cylinder head 17.

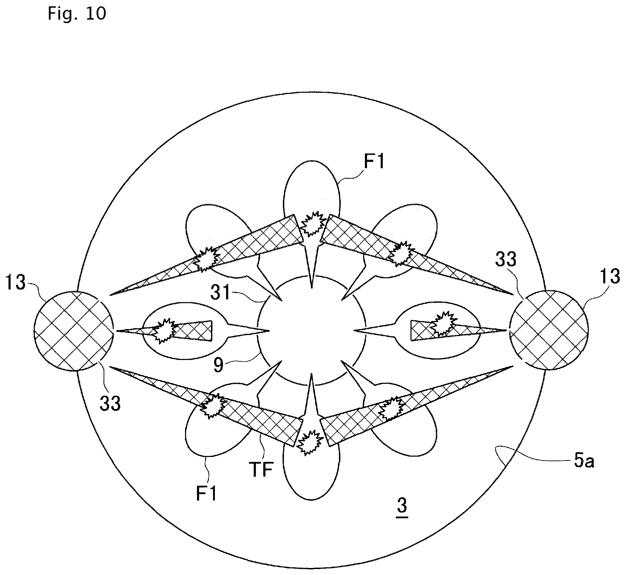

In the variant illustrated in Fig. 10, a single fuel injector 9 is located at the cylinder head 17 whereas more than one prechamber 13 or, in the instant example, two prechambers 13 are located in lateral portions of the cylinder 5. Each torch flame TF ejected through the orifices 33 of each of the prechambers 13 may contribute to the ignition of at least one of the streams of the injected main fuel F1. Nevertheless, again, there may alternatively be a torch flame that does not directly contribute to the ignition of the streams of the injected main fuel F1. Yet alternatively, in a further variant (not shown), a single fuel injector 9 may be located at the cylinder head 17 whereas two prechambers 13 may be located in lateral portions of the cylinder head 17.

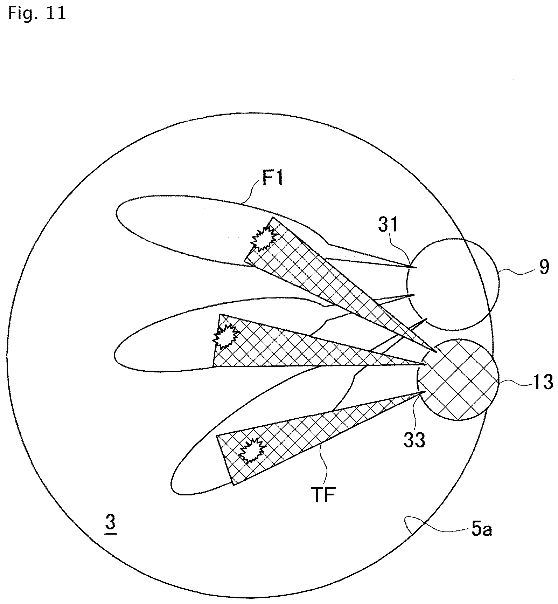

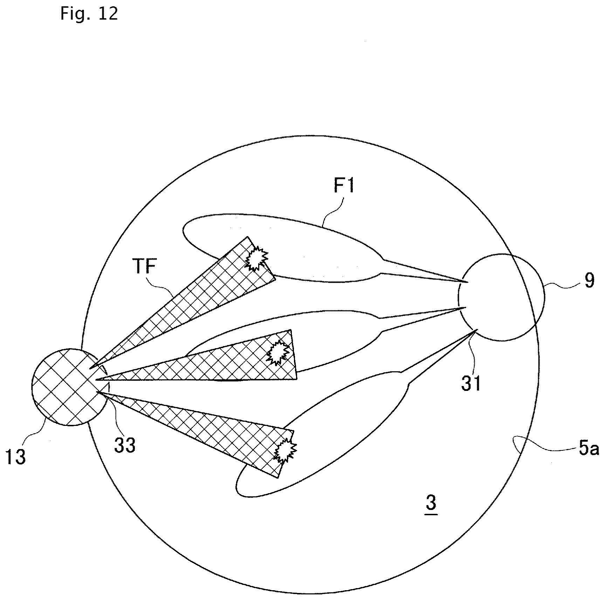

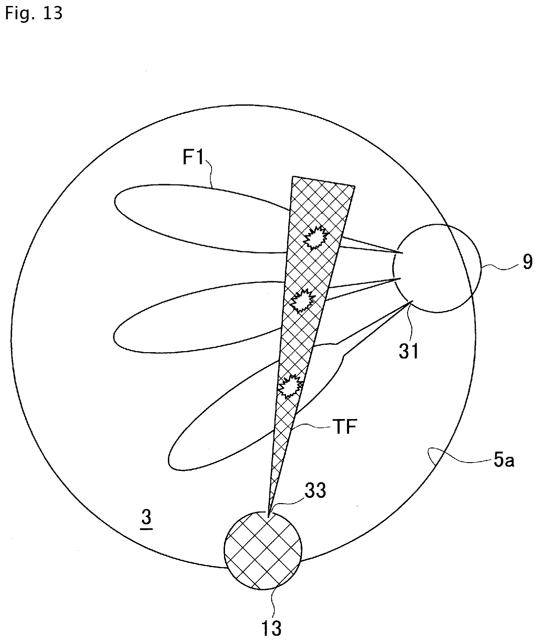

Further, both of the fuel injector 9 and the prechamber 13 may be located in lateral portions of the cylinder 5 or in lateral portions of the cylinder head 17. The fuel injector 9 and the prechamber 13 may be located adjacent to each other as shown in Fig. 11 or located opposite to each other as shown in Fig. 12. Furthermore, the fuel injector 9 and the prechamber 13 may be positioned, for example, such that the extension of the central axis of one of the fuel injector 9 or the prechamber 13 forms an angle of 90 degrees to the extension of the central axis of the other of the fuel injector 9 and the prechamber 13, as shown in Fig. 13.

It should be noted that while all of the foregoing examples represent examples of the configuration in which the fuel injector 9 includes multiple fuel injection holes 31, the fuel injector may alternatively include a single fuel injection hole 31. For instance, the fuel injector 9 located in a circumferential wall of the cylinder 5 as shown in Fig. 7A can alternatively be provided with a single fuel injection hole 31.

As has been illustrated with respect to these variants, it is not necessarily vital for the fuel injector 9 and the prechamber 13, which serves as an ignition source, to be adjacent to each other. Hence, an existing prechamber-assisted, internal combustion engine design can be easily turned into an internal combustion engine capable of carrying out diffusive combustion by, for example, retrofitting it with a fuel injector 9 in a lateral portion of the cylinder 5 or a lateral portion of the cylinder head 17. Thus, by using the prechamber 13 to serve as an ignition source for diffusive combustion, greater design freedom with respect to the number and arrangement of the fuel injector(s) 9 and prechamber(s) 13, among others, can be realized.

As has been discussed so far, the internal combustion engine 1 of the instant embodiment according to a first implementation includes a cylinder 5 in which a main combustion chamber 3 is defined, a piston 7 configured to reciprocate within the cylinder 5, a fuel injector 9 configured to inject a fuel F1 into the main combustion chamber 3, and a prechamber 13 located so as to adjoin the main combustion chamber 3. The prechamber 13 includes an orifice 33 and is configured to generate and eject torch flame TF through the orifice 33, and the prechamber 13 is positioned such that the torch flame TF ejected through the orifice 33 ignites the fuel F1 injected from the fuel injector 9 in the main combustion chamber 3. According to this configuration, the internal combustion engine is capable of carrying out diffusive combustion and can more easily accommodate changes in the specifications surrounding the fuel injector 9 flexibly.

In a second implementation, the internal combustion engine 1 of the instant embodiment according to the first implementation may further include a feature wherein the fuel injector 9 is cylindrically shaped and includes a plurality of fuel injection holes 31 arranged in the circumferential direction of the fuel injector 9, and wherein the prechamber 13 is positioned such that the torch flame TF from the prechamber 13 ignites the fuel F1 injected through each of the plurality of fuel injection holes 31. According to this configuration, the main fuel F1 can be injected in a distributed manner within the main combustion chamber 3, thus, making it possible to carry out more efficient combustion.

In a third implementation, the internal combustion engine 1 of the instant embodiment according to the first or second implementation may further include a feature wherein the plurality of fuel injection holes 31 are arranged at regular intervals in the circumferential direction. According to this configuration, the main fuel F1 can be distributed more uniformly within the main combustion chamber 3, thus, making it possible to conduct more efficient combustion.

In a fourth implementation, the internal combustion engine 1 of the instant embodiment according to any one of the first to third implementations may further include a feature wherein the prechamber 13 comprises a smaller number of orifices 33 than the number of the fuel injection holes 31, and wherein one or more of the orifices 33 are arranged such that the torch flame TF ejected therethrough ignites the fuel injected through more than one of the fuel injection holes 31. According to this configuration, it can be ensured that the streams of the injected fuel are efficiently ignited within the main combustion chamber 3 to implement diffusive combustion.

In a fifth implementation, the internal combustion engine 1 of the instant embodiment according to any one of the first to fourth implementations may further include a feature wherein the one or more of the orifices 33 are arranged to satisfy the relation: L1 > L2, where L1 indicates a distance between the axis C1 of a respective orifice 33 and the axis C2 of a first one 31A of the more than one of the fuel injection holes 31 that is closer to the respective orifice 33, and L2 indicates a distance between the axis C1 of the respective orifice 33 and the axis C3 of a second one 31 of the more than one of the fuel injection holes 31 that is located farther than the first one 31A of the more than one of the fuel injection holes 31 from the respective orifice 33. According to this configuration, it can be ensured that the torch flame TF through one orifice 33 ignites the main fuel F1 that comes from more than one of the fuel injection holes 31.

In a sixth implementation, the internal combustion engine 1 of the instant embodiment according to any one of the first to fifth implementations may further include a feature wherein the prechamber 13 comprises a first orifice 33A located so as to face towards the fuel injector 9 and a second orifice 33B located so as to face away from the fuel injector 9, and wherein the first orifice 33A has an orifice size larger than that of the second orifice 33B. According to this configuration, the timings of ignition of different streams of the injected fuel can be aligned to conduct more homogeneous combustion within the main combustion chamber 3.

In a seventh implementation, the internal combustion engine 1 of the instant embodiment according to any one of the first to sixth implementations may further include a feature wherein the fuel F1 comprises a hydrogen-containing gas. According to this configuration, the amount of carbon dioxide discharged from the internal combustion engine 1 can be reduced.

In an eighth implementation, the internal combustion engine 1 of the instant embodiment according to any one of the first to seventh implementations may further include a feature wherein the prechamber 13 is positioned such that a first volume S1 delimited by an imaginary inner peripheral surface V1 formed by extending the peripheral wall surface 33a of the orifice 33 of the prechamber 13 towards the main combustion chamber 3 at least partially overlaps with a second volume S2 delimited by an imaginary inner peripheral surface V2 formed by extending the peripheral wall surface 31a of a fuel injection hole 31of the fuel injector 9 towards the main combustion chamber 3. According to this configuration, the torch flame TF ejected through the orifice 33 out of the prechamber 13 can more reliably ignite the main fuel F1 injected from the fuel injector 9 within the main combustion chamber 3.

While preferred embodiments of the present disclosure have thus far been described with reference to the drawings, various additions, modifications, or omissions can be made therein without departing from the principles of the present disclosure and are thus encompassed by the scope of the present disclosure.

### (Reference Symbols)

- 1: internal combustion engine
- 3: main combustion chamber
- 5: cylinder
- 7: piston
- 9: fuel injector
- 13: prechamber
- 31: fuel injection hole
- 31A: first fuel injection hole
- 31B: second fuel injection hole
- 33: orifice
- 33A: first orifice
- 33B: second orifice
- 33X: shared orifice
- 35: auxiliary fuel injector
- 37: ignition plug
- C1: axis of shared orifice
- C2: axis of first fuel injection hole
- C3: axis of second fuel injection hole
- F1: main fuel (fuel)
- L1: distance between axis of shared orifice and axis of first fuel injection hole
- L2: distance between axis of shared orifice and axis of second fuel injection hole
- S1: first volume
- S2: second volume
- TF: torch flame

## Claims

1. An internal combustion engine comprising:
a cylinder in which a main combustion chamber is defined;
a piston configured to reciprocate within the cylinder;
a fuel injector configured to inject a fuel into the main combustion chamber; and
a prechamber located so as to adjoin the main combustion chamber, the prechamber including an orifice and configured to generate and eject torch flame through the orifice, and the prechamber being positioned such that the torch flame ejected through the orifice ignites the fuel injected from the fuel injector in the main combustion chamber.

2. The internal combustion engine as claimed in claim 1, wherein the fuel injector is cylindrically shaped and includes a plurality of fuel injection holes arranged in a circumferential direction of the fuel injector, and wherein the prechamber is positioned such that the torch flame from the prechamber ignites the fuel injected through each of the plurality of fuel injection holes.

3. The internal combustion engine as claimed in claim 2, wherein the plurality of fuel injection holes are arranged at regular intervals in the circumferential direction.

4. The internal combustion engine as claimed in claim 2 or 3, wherein the prechamber comprises a smaller number of orifices than the number of the fuel injection holes, and wherein one or more of the orifices are arranged such that the torch flame ejected therethrough ignites the fuel injected through more than one of the fuel injection holes.

5. The internal combustion engine as claimed in claim 4, wherein the one or more of the orifices are arranged to satisfy the relation: L1 > L2, where L1 indicates a distance between an axis of a respective orifice and an axis of a first one of the more than one of the fuel injection holes that is closer to the respective orifice, and L2 indicates a distance between the axis of the respective orifice and an axis of a second one of the more than one of the fuel injection holes that is located farther than the first one of the more than one of the fuel injection holes from the respective orifice.

6. The internal combustion engine as claimed in claim 2 or 3, wherein the prechamber comprises a first orifice located so as to face towards the fuel injector and a second orifice located so as to face away from the fuel injector, and wherein the first orifice has an orifice size larger than that of the second orifice.

7. The internal combustion engine as claimed in claim 1 or 2, wherein the fuel comprises a hydrogen-containing gas.

8. The internal combustion engine as claimed in claim 1 or 2, wherein the prechamber is positioned such that a first volume delimited by an imaginary inner peripheral surface formed by extending a peripheral wall surface of the orifice of the prechamber towards the main combustion chamber at least partially overlaps with a second volume delimited by an imaginary inner peripheral surface formed by extending a peripheral wall surface of a fuel injection hole of the fuel injector towards the main combustion chamber.
